Europäisches Patentamt

European Patent Office

Office européen des brevets

(19)

(11) Numéro de publication : **0 029 390**
**B1**

(12) **FASCICULE DE BREVET EUROPÉEN**

(45) Date de publication du fascicule du brevet :
05.09.84

(21) Numéro de dépôt : **80401635.0**

(22) Date de dépôt : **14.11.80**

(51) Int. Cl.³ : **G 06 K 17/00**, G 03 B 21/11

(54) Lecteur de microfiches.

(30) Priorité : 14.11.79 FR 7928083

(43) Date de publication de la demande :
27.05.81 Bulletin 81/21

(45) Mention de la délivrance du brevet :
05.09.84 Bulletin 84/36

(84) Etats contractants désignés :
AT BE CH DE GB IT LI LU NL SE

(56) Documents cités :
DE-A- 2 647 831
US-A- 3 841 747
US-A- 4 086 469

(73) Titulaire : **David, Michel Roger**
**206, rue Lafayette**
**F-75010 Paris (FR)**

(72) Inventeur : **David, Michel Roger**
**206 rue Lafayette**
**F-75010 Paris (FR)**
Inventeur : **Krouk, Emmanuel**
**21, avenue de la Merne**
**F-92600 Asnières (FR)**

(74) Mandataire : **Joly, Jean-Jacques et al**
**CABINET BEAU DE LOMENIE 55, rue d'Amsterdam**
**F-75008 Paris (FR)**

Jouve, 18, rue St-Denis, 75001 Paris, France

## Description

La présente invention concerne un lecteur de microfiches tel que décrit dans le préambule de la revendication 1.

Une microfiche comporte généralement plusieurs dizaines de vues disposées en lignes et en colonnes sur un support rectangulaire et repérées de façon alphanumérique en affectant aux lignes et aux colonnes des chiffres et des lettres en ordre croissant depuis une origine située normalement dans un angle.

Pour éviter de fastidieuses manipulations à l'opérateur, on a proposé de réaliser des lecteurs munis d'un clavier permettant d'amener en position de lecture une vue choisie en tapant sur le clavier, soit le chiffre et la lettre de la colonne et de la ligne, soit un numéro d'ordre de la vue sur la microfiche, ce numéro étant converti en abscisse et ordonnée.

Un lecteur de microfiches de ce dernier type est décrit dans le document US-A-4 086 469. Il comporte un passe-vue mobile sur un plateau, deux moteurs pas à pas destinés à entraîner le passe-vue suivant deux axes X et Y orthogonaux et un dispositif de commande comprenant un clavier et un circuit de commande des moteurs pour amener en position de lecture une vue sélectionnée par action sur le clavier. Le circuit de commande comprend des registres pour enregistrer des informations représentant les coordonnées de la vue en position de lecture, des moyens de calcul pour calculer les coordonnées d'une nouvelle vue choisie à partir du numéro formé sur le clavier, afin de commander le moteur pas à pas en fonction des différences entre les coordonnées calculées et celles enregistrées.

Avec un lecteur tel que celui décrit dans le brevet US-A-4 086 469 ou des lecteurs d'un type voisin, l'opérateur peut facilement commander la venue d'une vue en position de lecture en tapant sur le clavier le numéro d'ordre ou la combinaison lettre-chiffres qui identifie cette vue. Toutefois, les lecteurs du type indiqué ci-dessus ne donnent pas entière satisfaction, car il s'avère fréquemment nécessaire de corriger manuellement le cadrage d'une vue amenée automatiquement en position de lecture, quand bien même le cadrage fin a déjà précédemment réglé pour une autre vue de la même microfiche. La raison du décadrage est la suivante. Pour passer d'une vue à la suivante horizontalement ou verticalement sur une microfiche de déplacement exact à effectuer théoriquement ne correspond généralement pas à un nombre entier de pas des moteurs d'entraînement. Si le nombre de pas à faire accomplir aux moteurs est calculé uniquement en fonction de la différence entre les coordonnées — exprimées en numéros de lignes et de colonnes — de la nouvelle vue sélectionnée et celles de la vue en position de lecture, comme c'est le cas dans US-A-4 086 469, il y a cumul des erreurs et risque de décadrage. On pourrait bien sûr faire en sorte que les distances entre lignes et entre colonnes soient des multiples entiers des pas des moteurs correspondants. Ceci toutefois limiterait l'utilisation du lecteur à un type bien précis de microfiches.

La présente invention a pour but d'éviter l'inconvénient précité des lecteurs de microfiches connus en fournissant un lecteur de microfiches avec lequel il suffit de réaliser une fois le réglage du cadrage fin d'une vue d'une microfiche placée sur le passe-vue pour être sûr que n'importe quelle autre vue de la même microfiche qui sera automatiquement amenée en position de lecture ne nécessitera pas de correction du cadrage, et ce sans qu'il soit nécessaire que les distances entre lignes ou entre colonnes soient des multiples entiers des pas moteurs.

Ce but est atteint par un lecteur de microfiches tel que défini par la revendication 1.

Conformément à l'invention, sur la base des informations mémorisées caractérisant le type de microfiche utilisé et connaissant les coordonnées d'une nouvelle vue choisie, on élabore une information représentant la valeur entière arrondie du nombre de pas qu'il faudrait accomplir pour aller de l'origine sur la microfiche jusqu'à la vue choisie. L'erreur maximale venant de l'opération d'arrondi est un demi-pas. En retranchant de cette information calculée une information enregistrée représentant la position de la vue en position de lecture, on n'introduit pas d'erreur supplémentaire puisqu'il a nécessairement fallu un nombre entier de pas pour amener cette dernière vue dans la position de lecture. L'erreur de positionnement est donc non cumulée et au plus égale à un demi-pas pour toutes les vues de la microfiche. Si le cadrage correct d'une vue a été effectué une fois, il restera donc bon pour toutes les autres vues puisqu'un décalage d'un demi-pas ne suffit pas pour sortir du cadre de projection.

Différentes particularités avantageuses que peut présenter un lecteur de microfiches conforme à l'invention sont exposées dans les revendications dépendantes 2 à 5.

Un mode particulier de réalisation du lecteur de microfiches conforme à l'invention est décrit ci-après, à titre indicatif mais non limitatif, en référence aux dessins annexés sur lesquels :

la figure 1 est une vue schématique en perspective d'un lecteur de microfiches,

la figure 2 est un schéma d'un dispositif de commande d'un lecteur de microfiches conforme à l'invention,

les figures 3A et 3B sont des organigrammes illustrant différentes opérations effectuées par l'unité de traitement du dispositif de commande illustré par la figure 2, et

la figure 4 est une vue schématique en plan illustrant partiellement une microfiche placée sur le passe-vue du lecteur.

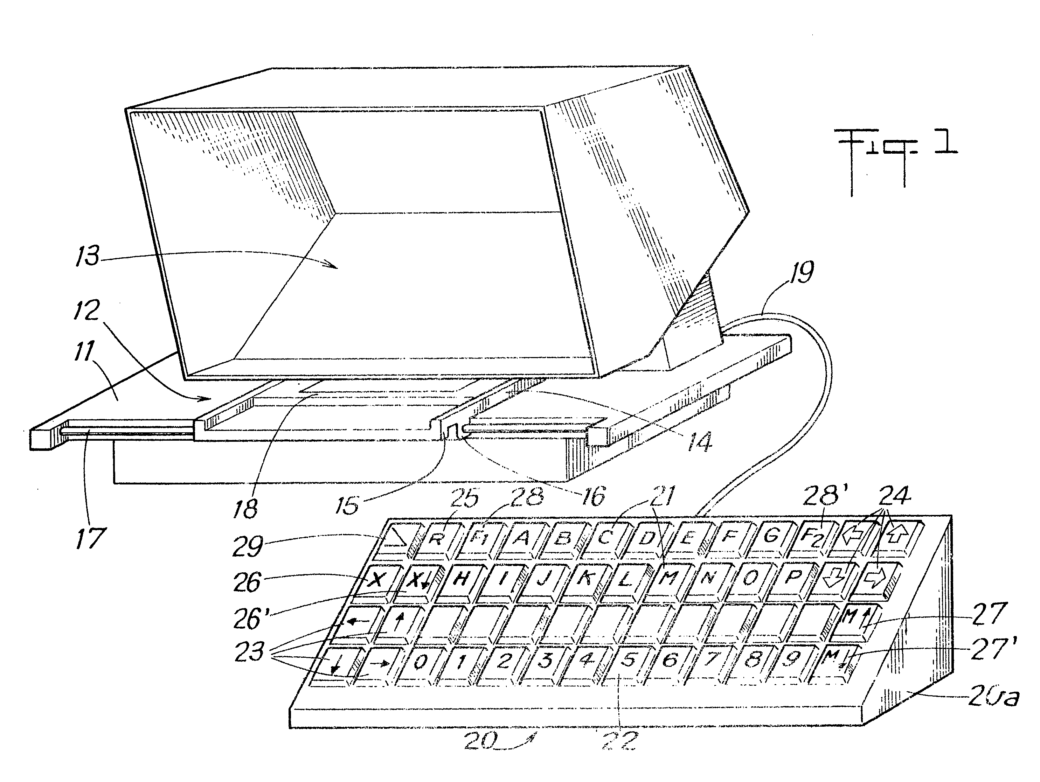

Sur la figure 1, la référence 10 désigne d'une façon générale un lecteur de microfiches comportant un plateau horizontal 11, un passe-vue 12 mobile par rapport au plateau suivant deux axes perpendiculaires l'un à l'autre, et un écran 13. Une optique et une source lumineuse (non représentées) permettent de former sur l'écran 13 l'image agrandie d'une vue en position de lecture d'une microfiche placée sur le passe-vue. Le passe-vue 12 comporte une glissière 14 mobile longitudinalement sous l'action d'un moteur pas à pas (non représenté). La glissière 14 porte une crémaillère 15 reliée mécaniquement à l'arbre de son moteur d'entraînement et des douilles 16 pour le guidage de la glissière 14 le long d'un axe 17 porté par le plateau 11. Une platine 18 pouvant recevoir une ou plusieurs microfiches est mobile transversalement par rapport à la glissière 14 en étant guidée le long des côtés transversaux de celle-ci. L'entraînement de la platine 18 est assuré par un second moteur pas à pas (non représenté) solidaire de la glissière 14 et coopérant avec une crémaillère prévue le long de l'un des bords transversaux de la platine 18.

Le lecteur 10 du type défini ci-dessus est bien connu en soi. Sa structure n'est donc pas ici décrite plus en détail.

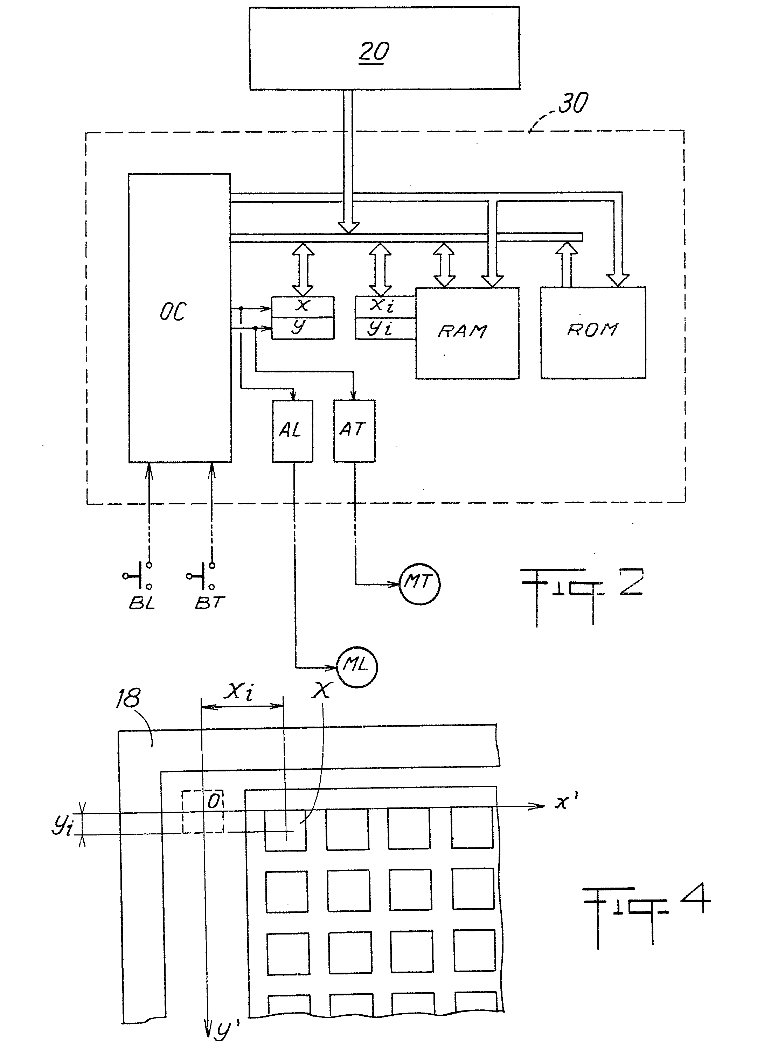

On décrira maintenant en référence aux figures 1 et 2 les moyens permettant, conformément à l'invention, de commander le fonctionnement du lecteur de microfiches, en particulier la recherche automatique d'une vue.

Ces moyens de commande comportent un clavier 20 dont les touches sont situées sur la face supérieure d'un boîtier 20a renfermant un circuit de commande 30. Le circuit 30 est relié au lecteur 10 par un câble souple multiconducteurs 19.

Des touches alphanumériques 21, 22 permettent d'introduire dans le circuit de commande les adresses des vues. Par exemple, une microfiche d'un type connu comporte 288 vues identifiées chacune par son ordonnée (une lettre de A à P correspondant à la ligne) et son abscisse (un chiffre de 1 à 18 correspondant à la colonne). Ainsi, la vue située à l'intersection de la 5e ligne et de la 12e colonne porte l'adresse E 12.

Des touches de cadrage fin 23 commandent le déplacement d'un pas de moteur de la platine portant la microfiche vers la gauche, l'avant, l'arrière, ou la droite selon celle des touches 23 choisie.

Des touches 24 commandent le déplacement de la platine d'un pas égal à celui séparant deux vues voisines sur la microfiche, le déplacement étant effectué vers la gauche, l'avant, l'arrière ou la droite selon celle des touches 24 choisie.

Si l'actionnement d'une touche 23 ou 24 est maintenu de façon continue, le déplacement commandé par cette touche est effectué de façon répétitive.

La touche 25 permet de sélectionner les informations correspondant au type de la microfiche lue, notamment les informations relatives au taux de réduction des vues sur la microfiche. Plusieurs séries d'informations peuvent être pré-enregistrées dans une mémoire morte ROM du circuit de commande, les séries étant relatives à des microfiches de types différents ayant chacune un taux de réduction R particulier. La sélection en fonction de la microfiche lue est effectuée en actionnant la touche 25 et une touche numérique, les différents types de microfiches étant alors identifiés par R1, R2, R3, ...

La touche 26 permet d'amener automatiquement en position de lecture une vue X de référence, ou index ; et la touche 26' permet de choisir comme vue index la vue située en position de lecture.

La touche 27 permet d'amener automatiquement en position de lecture une vue dont l'adresse a été mémorisée, ou successivement plusieurs vues dans l'ordre dans lequel leurs adresses ont été mémorisées. La mémorisation d'une adresse d'une vue ou des adresses d'une séquence de vues est effectuée par action sur la touche 27'.

Les touches 28 et 28' permettent, lorsque deux microfiches ont été placées côte à côte sur la platine, de passer d'une microfiche à l'autre, c'est-à-dire amener soit la microfiche de gauche F1 ou la microfiche de droite F2 en position de lecture.

Enfin, la touche 29 commande l'éjection de la platine du passe-vue pour placer une ou plusieurs microfiches sur cette platine ou les en retirer.

Le circuit de commande 30 comporte un organe de calcul OC du type microprocesseur, la mémoire morte ROM, une mémoire de données RAM.

L'organe de calcul est connecté à des compteurs-décompteurs de déplacement x, y dont les contenus représentent, respectivement, l'abscisse de la vue en position de lecture, exprimée en pas du moteur d'entraînement de la glissière 14, et l'ordonnée de la même vue exprimée en pas du moteur d'entraînement de la platine 18, par rapport à une origine sur le passe-vue.

Des registres $x_i$, $y_i$ connectés à l'organe de calcul OC sont prévus pour la mémorisation des coordonnées exprimées en pas moteur d'une adresse origine ou index X sur la microfiche par rapport à une origine sur le passe-vue. Ces registres sont, par commodité, illustrés de façon indépendante sur la figure 2. Ils sont normalement intégrés à la mémoire de données RAM.

L'organe de calcul OC est encore relié, par l'intermédiaire de circuits de puissance AL et AT aux moteurs pas à pas ML et MT commandant, respectivement, le déplacement longitudinal (le long de l'axe des abscisses) de la glissière 14, et le déplacement transversal (le long de l'axe des ordonnées) de la platine 18.

La phase d'initialisation du fonctionnement du lecteur 10 et les opérations effectuées automatiquement sous la commande du lecteur 10 se déroulent suivant des microprogrammes enregistrés dans la mémoire ROM. Cette phase d'initialisation et certaines opérations automatiques seront maintenant décrites ci-après en référence aux figures 2, 3A et 3B et 4.

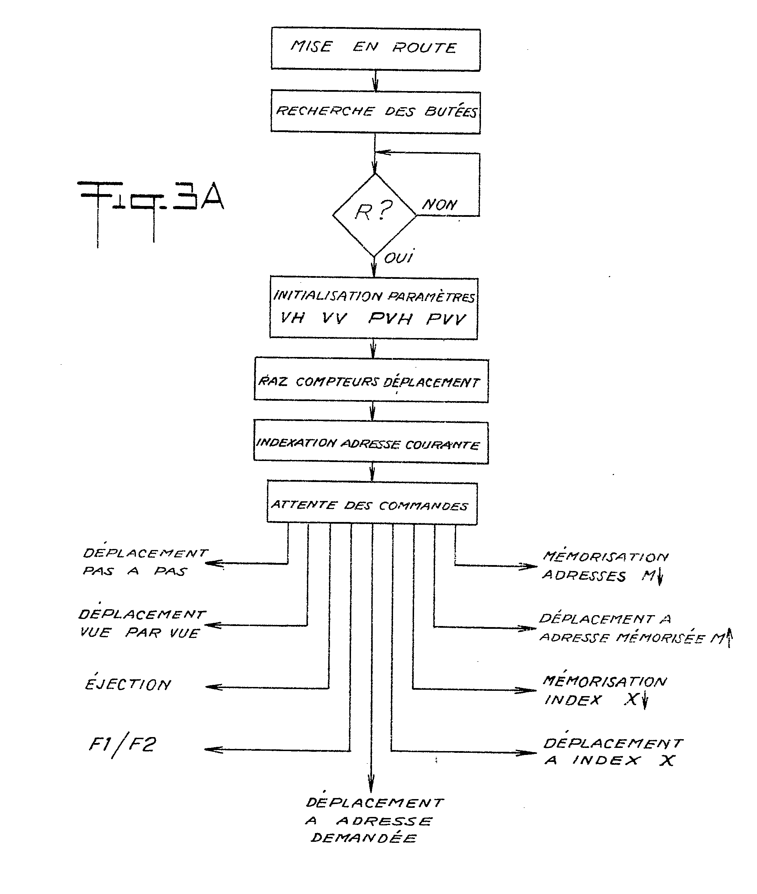

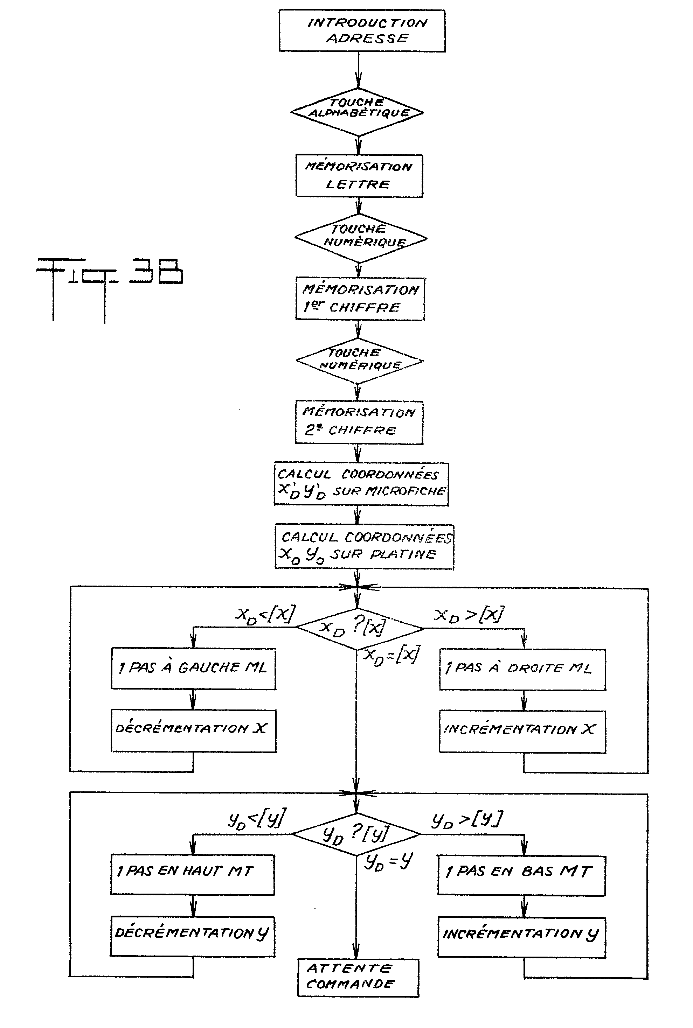

Une microfiche au moins est placée sur la platine 18 et celle-ci est introduite dans la glissière 14. La mise en route est effectuée par action sur une touche marche-arrêt (non représentée). Au démarrage (figure 3A), les moteurs ML et MT tournent jusqu'à ce que la glissière 14 et la platine 18 viennent en contact de butées BL et BT (figure 2) situées respectivement sur le plateau 11 et sur la glissière 14. Les emplacements de ces butées sont tels que, lorsque la glissière 14 et la platine 18 sont en contact avec elles, la zone de la platine 18 située dans le coin en haut à gauche se trouve en position de lecture. Les butées BL et BT déterminent donc la position de référence du passe-vue par rapport à deux axes orthogonaux $Ox'$ et $Oy'$ parallèles aux côtés longitudinaux et transversaux de la platine 18 et solidaires du plateau 11 (figure 4). Lorsque le contact est établi avec les butées BL et BT, les moteurs ML et MT s'arrêtent sous la commande, par exemple, de micro-interrupteurs.

Le passe-vue étant amené dans sa position de référence, le système est en attente de l'introduction par le clavier 20 du code correspondant au type de la microfiche placée sur le passe-vue, code introduit par action sur la touche 25 puis sur une touche numérique 22 (ou éventuellement deux si le nombre de types différents de microfiches utilisables est supérieur à 10). Les informations contenues dans la mémoire ROM spécifiques au type de microfiche identifié sont alors validées. Ces informations comprennent notamment les paramètres suivants : le nombre de vues par ligne VH ; le nombre de vues par colonne VV ; le nombre de pas du moteur ML pour une distance égale au pas entre deux colonnes voisines, soit le nombre de pas longitudinaux par vue PVH ; et le nombre de pas du moteur MT pour une distance égale au pas entre deux lignes voisines, soit le nombre de pas verticaux par vue PVV.

Dans la pratique, les nombres PVH et PVV ne sont pas des nombres entiers. Les informations pré-enregistrées peuvent être soit les valeurs réelles de PVH et PVV, soit leurs valeurs entières arrondies symbolisées par PVH$^+$ et PVV$^+$. Dans ce dernier cas, les informations pré-enregistrées pour chaque type de microfiche comportent en outre les taux de rattrapage KV et KH correspondant aux parties fractionnaires tronquées de PVH et PVV.

Les paramètres étant validés, les compteurs de déplacement x et y sont mis à zéro et l'adresse actuelle est indexée dans les registres $x_i$ et $y_i$, c'est-à-dire, en l'espèce, que les contenus de ces registres sont mis à zéro.

Le système est alors en attente des commandes venant du clavier.

La commande de déplacement pas à pas est effectuée par action sur les touches 23. Selon celle parmi les quatre touches 25 actionnées, le moteur ML ou le moteur MT effectue un pas dans un sens ou dans l'autre et le contenu du compteur x ou du compteur y est incrémenté ou décrémenté d'une unité.

La commande de déplacement vue par vue est effectuée par action sur les touches 24. Selon celle parmi les quatre touches 24 actionnées, le moteur ML ou le moteur MT effectue dans un sens ou dans l'autre un nombre de pas correspondant à la valeur entière arrondie PVH$^+$ ou PVV$^+$ lue parmi les paramètres initialisés ou calculée à partir de ceux-ci ; le contenu du compteur x ou du compteur u est incrémenté ou décrémenté du nombre de pas effectués par le moteur correspondant.

La commande automatique du passage d'une vue est réalisée comme suit.

Le cas échéant, on procède d'abord au cadrage fin de la vue de référence, ou index X, située normalement en haut et à gauche de la microfiche. La platine du passe-vue étant par exemple dans sa position de référence définie par les butées BL et BT, il se peut que par suite d'un positionnement incorrect de la microfiche sur la platine 18, la vue située en haut et à gauche de la microfiche soit mal cadrée. Le cadrage fin de la vue index est effectué au moyen des touches 23. Les coordonnées de la vue index sont alors mémorisées par action sur la touche 26' (X ↓) en transférant, dans les registres $x_i$ et $y_i$, les contenus [x] et [y] des compteurs x, y.

La platine 18 ayant ensuite été éventuellement amenée dans une position quelconque, une vue désirée est amenée en position de lecture par la séquence des opérations suivantes (fig. 3B) ;

— vérification que l'adresse d'une vue a été introduite par le clavier par action sur une touche alphanumérique puis successivement sur deux touches numériques (par exemple la vue d'adresse 76 est appelée en formant J 06) ;

— calcul des coordonnées $x'_D$ et $y'_D$ sur la microfiche de la vue demandée, le calcul étant effectué à partir de l'adresse introduite et mémorisée et sur la base des paramètres initialisés ; les coordonnées sont calculées en nombre de pas du moteur ML et du moteur MT à partir de la vue origine sur la microfiche, c'est-à-dire la vue index X à adresse AI (par exemple, pour passer à la vue J6, on a

$x'_D$ = valeur entière arrondie de 10 PVH et
$y'_D$ = valeur entière arrondie de 5 PVV).

— calcul des coordonnées $x_D$ et $y_D$ de la vue demandée par rapport à l'origine sur la platine : $x_D = x'_D + x_i$ et $y_D = y'_D + y_i$, $x_i$ et $y_i$ étant les coordonnées de la vue index (X) par rapport à l'origine sur la platine 18,

— comparaison du contenu du compteur x avec $x_D$, commande d'un pas à droite ou à gauche du moteur ML avec incrémentation ou décrémentation d'une unité du compteur x, selon le signe de comparaison, ce cycliquement jusqu'à égalité entre $x_D$ et le contenu de x,

— comparaison du contenu du compteur y avec $y_D$ commande d'un pas vers l'avant ou l'arrière du moteur ML avec incrémentation ou décrémentation d'une unité du compteur y, selon le signe de la comparaison, ce cycliquement jusqu'à égalité entre $y_D$ et le contenu de y, et

— retour en attente d'une commande.

La mémorisation d'une ou plusieurs adresses de vues est commandée par action sur la touche 27'. Après actionnement de cette touche, les adresses à mémoriser sont introduites par action sur les touches alphanumériques. Dans le cas d'une microfiche comportant 16 lignes de vues désignées par A à P et 18 colonnes de vues référencées 1 à 18, les adresses sont introduites par actions successives sur une touche alphabétique et deux touches numériques : par exemple B 12, C 06, I 04, ... Les adresses sélectionnées sont enregistrées dans des cases successives de la mémoire de données RAM.

Les vues dont les adresses ont été successivement mémorisées sont amenées dans cet ordre en position de lecture par actions successives sur la touche 27. Pour la commande du déplacement de la platine 18, chaque adresse lue en réponse à l'actionnement de la touche 27 est traitée comme une adresse introduite par action sur les touches alphanumériques du clavier (figure 3B).

Le retour à la vue index de coordonnées $x_i$, $y_i$ peut être commandé simplement par action sur la touche 26. Les coordonnées $x_i$, $y_i$ sont alors, pour la commande du déplacement de la platine 18, traitées de la même façon que les coordonnées calculées $x_D$ et $y_D$ dans le cas de la figure 3A.

La commande d'éjection est effectuée par action sur la touche 29. L'éjection est produite par télécommande d'un éjecteur actionné par exemple électromagnétiquement, comme connu en soi.

Comme indiqué plus haut, il est possible de passer de l'une à l'autre des deux microfiches de même type placées côte à côte sur la platine 18. Parmi les paramètres pré-enregistrés relatifs à un type de microfiche peut figurer la quantité $X_{DL}$ représentant le décalage longitudinal normal entre deux vues de mêmes adresses sur les deux microfiches, décalage exprimé en nombre de pas du moteur ML. Cette quantité est chargée dans un registre $x_{DL}$ (non représenté) par exemple intégré à la mémoire RAM.

Le passage de la microfiche de gauche à la microfiche de droite s'effectue en actionnant la touche F2.

Le moteur ML effectue alors $X_{DL}$ pas vers la droite pour amener en position de lecture la vue de la microfiche de droite ayant même adresse que celle de la microfiche de gauche précédemment en position de lecture.

Il est possible qu'après actionnement de la touche F2, le cadrage des vues de la microfiche de droite soit incorrect du fait que la quantité $X_{DL}$ ne correspond pas au décalage réel entre les deux microfiches.

Dans ce cas, on peut procéder au moyen des touches 25 au cadrage fin correct de la première vue de la microfiche de droite amenée en position de lecture par action sur la touche F2.

Suivant une variante de réalisation du lecteur conforme à l'invention, on peut alors prévoir deux registres $x_{DL}$ et $y_{DL}$ (intégrés par exemple à la mémoire RAM) pour enregistrer, d'une part, la valeur $x_{DL}$ du décalage longitudinal entre les deux microfiches, valeur obtenue par modification éventuelle du paramètre $X_{DL}$ par suite de l'actionnement des touches 25, et, d'autre part, la valeur $Y_{DL}$ du décalage transversal entre les microfiches, valeur obtenue en fonction des touches 25 actionnées.

Le passage de la microfiche de gauche à celle de droite est commandé par actionnement de la touche F2 ce qui déclenche les opérations microprogrammées suivantes :

— translation longitudinale de la platine 18 vers la droite du nombre de pas du moteur ML égal au contenu $[x_{DL}]$ du registre $x_D$ et translation transversale éventuelle de la platine 18 vers l'avant ou l'arrière suivant le signe du contenu $[y_{DL}]$ du registre $y_{DL}$ et d'un nombre de pas du moteur MT égal à la valeur absolue de ce contenu (les contenus des registres $x_{DL}$ et $y_{DL}$ ayant été placés respectivement aux valeurs $X_{DL}$ et 0 à la mise en route du lecteur) ;

— diminution du contenu du compteur x de la quantité $x_{DL}$ et soustraction de la valeur réelle $Y_{DL}$ du contenu du compteur x ;

— si actionnement d'une ou successivement de plusieurs touches 25 pour le réglage fin éventuel de la vue de la microfiche de droite amenée en position de lecture, à chaque fois, modification correspondante du contenu $[x_{DL}]$ ou $[Y_{DL}]$ du registre $x_{DL}$ ou $y_{DL}$ et annulation de la modification du contenu du compteur x ou y provoquée par l'action d'une touche 25.

Le retour à la microfiche de gauche s'effectue par action sur la touche F1, ce qui déclenche les opérations microprogrammées suivantes :

— translation longitudinale de la platine 18 vers la gauche d'un nombre de pas du moteur ML égal au contenu $[x_{DL}]$ du registre $x_{DL}$ ;

— augmentation du contenu du compteur x de la quantité $x_{DL}$ ;

— translation transversale vers l'avant ou vers l'arrière de la platine 18 selon le signe du contenu $[y_{DL}]$ du registre $y_{DL}$ et d'un nombre de pas égal à la valeur absolue de ce contenu, et

— addition de la valeur réelle du contenu de $y_{DL}$ au contenu du compteur y.

Le réglage du décalage entre les microfiches F1 et F2 ayant été fait une fois lors du passage de la microfiche de gauche à celle de droite, ce réglage reste bon lors de tout passage ultérieur d'une microfiche à l'autre.

**Revendications**

1. Lecteur de microfiches comportant :
— un passe-vue (12) mobile sur un plateau (11),
— au moins un moteur pas à pas (ML, MT) pour entraîner le passe-vue suivant un axe, et
— un dispositif de commande comprenant un clavier (20) et un circuit de commande (30) avec des moyens d'enregistrement (x, y) pour enregistrer une information représentant au moins la coordonnée suivant ledit axe de la vue en position de lecture et des moyens de calcul pour calculer au moins un nombre représentant la coordonnée suivant ledit axe d'une nouvelle vue choisie par action sur le clavier, afin de commander le moteur pas à pas en fonction de la différence entre le nombre calculé et l'information enregistrée afin d'amener la vue choisie en position de lecture, caractérisé en ce que le dispositif de commande (30) comprend une mémoire dans laquelle sont enregistrées des informations caractérisant au moins un type de microfiche, notamment pour permettre de disposer d'une information représentant la distance entre deux vues consécutives le long dudit axe, exprimée en pas du moteur pas à pas, et en ce que ladite information enregistrée (x, y) et le nombre calculé ($x_D$, $y_D$) représentent les coordonnées respectives de la vue en position de lecture et de la nouvelle vue choisie exprimées en nombre entier arrondi de pas du moteur pas à pas (ML, MT), les moyens de calcul (OC) déterminant le nombre de pas effectif à faire accomplir au moteur pas à pas pour amener une nouvelle vue choisie en position de lecture.

2. Lecteur de microfiches selon la revendication 1, caractérisé en ce que l'organe de calcul (30) comporte des moyens d'enregistrement ($x_i$, $y_i$) pour enregistrer une information de décalage représentant le nombre de pas du moteur (ML, MT) qui sépare une position de référence liée à une microfiche placée sur le passe-vue (12) d'une origine sur le passe-vue et qui est déterminé par action sur au moins une touche de cadrage fin du clavier (20), et en ce que ladite coordonnée ($x_D$, $y_D$) d'une nouvelle vue choisie est calculée en déterminant la coordonnée ($x'_D$, $y'_D$) de cette nouvelle vue par rapport à la position de référence liée à la microfiche et en y ajoutant ladite information de décalage ($x_i$, $y_i$).

3. Lecteur de microfiches selon l'une quelconque des revendications 1 et 2, caractérisé en ce que la mémoire comporte plusieurs zones dans lesquelles sont mémorisées des informations caractérisant des types différents de microfiches et dont l'accès est commandé par action sur des touches du clavier (20) identifiant ces différents types de microfiches.

4. Lecteur de microfiches selon l'une quelconque des revendications 1 à 3, caractérisé en ce que l'organe de calcul comporte des moyens pour enregistrer une information représentant le nombre de pas qui sépare une position de référence liée à une microfiche sur le passe-vue d'une position de référence liée à une autre microfiche placée aussi sur le passe-vue, nombre de pas déterminé par action sur des touches de cadrage fin de clavier (20).

5. Lecteur de microfiches selon l'une quelconque des revendications 1 à 4, dans lequel une source lumineuse éclaire chaque vue en position de lecture, caractérisé en ce qu'il comporte un dispositif pour commander automatiquement l'extinction de la source lumineuse lors du déplacement du passe-vue (12).

## Claims

1. Microfiche reading means comprising :

— a view-carrier (12) movable over a tray (11),
— at least one stepwise motor (ML, MT) driving the view-carrier in one direction, and
— a control device comprising a keyboard (20) and a control circuit (30) with recording means (x, y) to record an item of information representing at least the coordinate along said direction of the view in reading position and means of calculating at least one number representing the coordinate along said direction of another view selected by actuating the keyboard, in order to control the stepwise motor in relation to the difference between the calculated number and the recorded item of information and to bring the selected view in reading position, characterised in that the control device (30) comprises a memory in which are recorded items of information characterising at least one type of microfiche thus permitting to have one item of information representing the distance between two consecutive views along said direction, expressed in steps of the stepwise motor, and in that said recorded information (x, y) and the calculated number ($x_D$, $y_D$) represent the respective coordinates of the view in reading position and of the newly selected view expressed as a rounded up integral number of steps of the stepwise motor (ML, MT), the calculating means (OC) defining the effective number of steps for the stepwise motor to accomplish in order to bring a newly selected view in reading position.

2. Microfiche reading means according to claim 1, characterised in that the calculating means (30) comprise recording means ($x_i$, $y_i$) to record a shift item of information representing the number of steps of the motor (M, MT) which separates a reference position related to a microfiche placed on the view-carrier (12) from an original point on said view-carrier and which is determined by actuating at least one fine registration key of the keyboard (20), and in that said coordinate ($x_D$, $y_D$) of a newly selected view is calculated by determining the coordinate ($x'_D$, $y'_D$) of said new view with respect to the reference position related to the microfiche and by adding there to the said shift item of information ($x_i$, $y_i$).

3. Microfiche reading means according to any one of claims 1 and 2, characterised in that the memory comprises several zones in which are stored items of information characterising different types of microfiches and the access of which is controlled by actuating keys on the keyboard (20), which keys identify these different types of microfiches.

4. Microfiche reading means according to any one of claims 1 to 3, characterised in that the calculating member comprises means of recording an item of information representing the number of steps separating one position of reference related to a microfiche on the view-carrier from one position of reference related to another microfiche also placed on the view-carrier, said number of steps being determined by actuating fine registration keys of the keyboard (20).

5. Microfiche reading means according to any one of claims 1 to 4, in which a light source lights up each view in reading position, characterised in that it comprises a device for controlling automatically the switching off of the light source whilst the view-carrier (12) is moving.

## Ansprüche

1. Mikrofiche-Lesegerät mit einem auf einer Platte (11) beweglichen Bildtransport (12), zumindest einem Schrittmotor (ML, MT) zum Antreiben des Bildtransports entlang einer Achse und mit einer Steuereinrichtung, umfassend eine Tastatur (20) und einen Steuerkreis (30) mit Speichermitteln (x, y) zum Speichern einer Information, die zumindest für die Koordinate entlang dieser Achse des Bildes in Leseposition steht, und Rechenmittel zum Errechnen von zumindest einer Zahl, die für die Koordinate entlang dieser Achse eines neuen, durch Betätigung der Tastatur gewählten Bildes steht, zwecks Steuerung des Schrittmotors als Funktion der Differenz zwischen der errechneten Zahl und der gespeicherten Information, um das gewählte Bild in Leseposition zu bringen, dadurch gekennzeichnet, daß die Steuereinrichtung (30) einen Speicher umfaßt, in welchem zumindest eine Mikrofiche-Art charakterisierende Informationen gespeichert sind, insbesondere um über eine Information verfügen zu können, die für den Abstand zwischen zwei aufeinanderfolgenden Bildern entlang der Achse, ausgedrückt in Schritten des Schrittmotors, steht, und daß die gespeicherte Information (x, y) und die errechnete Zahl ($x_D$, $y_D$) für die jeweilige Koordinate des Bildes in Leseposition und des neuen, gewählten Bildes stehen, ausgedrückt als gerundete ganze Zahl der Schritte des Schrittmotors (ML, MT), wobei die Rechenmittel (OC) die vom Schrittmotor auszuführende effektive Schrittanzahl bestimmen, um ein neues, gewähltes Bild in Leseposition zu bringen.

2. Mikrofiche-Lesegerät nach Anspruch 1, dadurch gekennzeichnet, daß das Rechenorgan (30) Speichermittel ($x_i$, $y_i$) zum Speichern einer Verschiebeinformation umfaßt, die für die Anzahl der Schritte des Motors (ML, MT) steht, welche eine mit einem auf dem Bildtransport (12) befindlichen Mikrofiche verbundene Referenzposition von einem Ausgangspunkt auf dem Bildtransport trennt und die durch Betätigung von zumindest einer Bild-Feineinstellungstaste der Tastatur (20) bestimmt wird, und daß die Koordinate ($x_D$, $y_D$) eines neuen, gewählten Bildes errechnet wird, indem die Koordinate ($x'_D$, $y'_D$) dieses neuen Bildes in bezug auf die mit dem Mikrofiche verbundene Referenzposition bestimmt und die Verschiebeinformation ($x_i$, $y_i$) hinzugefügt wird.

3. Mikrofiche-Lesegerät nach einem der Ansprüche 1 und 2, dadurch gekennzeichnet, daß der Speicher mehrere Abschnitte umfaßt, in denen Informationen zur Charakterisierung verschiedener Mikrofiche-Arten gespeichert sind und deren Zugang durch Betätigung der Tasten der Tastatur (20), die diese verschiedenen Mikrofiche-Arten identifizieren, gesteuert wird.

4. Mikrofiche-Lesegerät nach einem der Ansprüche 1 bis 3, dadurch gekennzeichnet, daß das Rechenorgan Mittel zum Speichern einer Information umfaßt, die für die Anzahl der Schritte steht, welche eine mit einem Mikrofiche verbundene Referenzposition auf dem Bildtransport von einer mit einem anderen, ebenfalls auf dem Bildtransport befindlichen Mikrofiche verbundenen Referenzposition trennt, wobei die Anzahl der Schritte durch Betätigung der Bild-Feineinstellungstasten der Tastatur (20) bestimmt wird.

5. Mikrofiche-Lesegerät nach einem der Ansprüche 1 bis 4, bei welchem eine Lichtquelle jedes Bild in Leseposition erleuchtet, dadurch gekennzeichnet, daß es eine Einrichtung zum automatischen Steuern des Erlöschens der Lichtquelle während der Verschiebung des Bildtransportes (12) umfaßt.

Fig. 1

0 029 390

Fig. 2

Fig. 4

# Fig.3A

MISE EN ROUTE

RECHERCHE DES BUTÉES

R ?  NON

OUI

INITIALISATION PARAMÈTRES
VH  VV  PVH  PVV

RAZ COMPTEURS DÉPLACEMENT

INDEXATION ADRESSE COURANTE

ATTENTE DES COMMANDES

DÉPLACEMENT
PAS A PAS

DÉPLACEMENT
VUE PAR VUE

ÉJECTION

F1/F2

MÉMORISATION
ADRESSES M↓

DÉPLACEMENT A
ADRESSE MÉMORISÉE M↑

MÉMORISATION
INDEX X↓

DÉPLACEMENT
A INDEX X

DÉPLACEMENT
A ADRESSE
DEMANDÉE

Fig. 3B

INTRODUCTION ADRESSE

TOUCHE ALPHABÈTIQUE

MÉMORISATION LETTRE

TOUCHE NUMÈRIQUE

MÉMORISATION 1$^{er}$ CHIFFRE

TOUCHE NUMÈRIQUE

MÉMORISATION 2$^{e}$ CHIFFRE

CALCUL COORDONNÉES $X'_D Y'_D$ SUR MICROFICHE

CALCUL COORDONNÉES $X_0 Y_0$ SUR PLATINE

$X_D ? [X]$

$X_D < [X]$

$X_D > [X]$

$X_D = [X]$

1 PAS À GAUCHE ML

DÉCRÉMENTATION X

1 PAS À DROITE ML

INCRÉMENTATION X

$Y_D ? [Y]$

$Y_D < [Y]$

$Y_D > [Y]$

$Y_D = Y$

1 PAS EN HAUT MT

DÉCRÉMENTATION Y

1 PAS EN BAS MT

INCRÉMENTATION Y

ATTENTE COMMANDE

4